(19) **Europäisches Patentamt**
**European Patent Office**
**Office européen des brevets**

(11) Veröffentlichungsnummer: **0 462 331 A1**

## (12) EUROPÄISCHE PATENTANMELDUNG

(21) Anmeldenummer: **90250168.3**

(51) Int. Cl.5: **D06F 31/00**

(22) Anmeldetag: **02.07.90**

(30) Priorität: **21.06.90 DE 9007004 U**

(43) Veröffentlichungstag der Anmeldung:
**27.12.91 Patentblatt 91/52**

(84) Benannte Vertragsstaaten:
**AT BE CH DE DK ES FR GB GR IT LI LU NL SE**

(71) Anmelder: **Haushaltprodukte Vertriebs GmbH**
**Graf-von-Zeppelin-Strasse**
**W-5430 Montabaur(DE)**

(72) Erfinder: **Fürbeth, Alfred**
**Hellgarten 26 a**
**W-5409 Dausenau(DE)**

(74) Vertreter: **Maikowski, Michael, Dipl.-Ing. Dr.**
**Patentanwälte Maikowski & Ninnemann**
**Xantener Strasse 10**
**W-1000 Berlin 15(DE)**

(54) **Vorrichtung zum Bereiten heisser Getränke.**

(57) Vorrichtung zum Bereiten heißer Getränke aus einer Flüssigkeit und einem Getränkesubstrat, mit einem die Flüssigkeit aufnehmenden Flüssigkeitsbehälter 1 und einem das Getränkesubstrat aufnehmenden Substratbehälter 2, durch den die erhitzte Flüssigkeit in einen das heiße Getränk aufnehmenden Getränkebehälter 3 geleitet wird. Der Flüssigkeitsbehälter 1 ist im wesentlichen dampfdicht abgeschlossen und weist einen Überlauf 10 auf, der in den Substratbehälter 2 gerichtet ist. Zumindest der Flüssigkeitsbehälter 1 besteht aus einem für Mikrowellen durchlässigen Material.

EP 0 462 331 A1

Rank Xerox (UK) Business Services

Die Erfindung betrifft eine Vorrichtung zum Bereiten heißer Getränke gemäß dem Oberbegriff des Anspruchs 1.

Es sind Kaffeeautomaten bekannt, die aus einem Filterbehälter, einer beheizbaren Bodenplatte und einem oberhalb des Filterbehälters oder seitlich zwischen dem Filterbehälter und der Bodenplatte verlaufenden Wasserbehälter bestehen. Zwischen dem Filterbehälter und der Bodenplatte ist eine Getränkekanne einsetzbar, in die der aufgebrühte Kaffee einläuft, dort gesammelt und mittels der erhitzten Bodenplatte warmgehalten wird.

Das Erhitzen des im Wasserbehälter befindlichen Wassers erfolgt über einen elektrisch beheizten Erhitzer, der einerseits mit dem das kalte Wasser aufnehmenden Wasserbehälter und andererseits über ein Ventil und eine Dampfleitung mit der oberen Öffnung des Filtergehäuses verbunden ist. Dadurch werden jeweils kleinere Mengen des Wassers erhitzt und unmittelbar in das Filtergehäuse geleitet, in dem sich ein Filter zur Aufnahme des gemahlenen Kaffees befindet.

Alternativ hierzu kann mit einer derartigen Vorrichtung auch Tee aufbereitet werden, indem anstelle gemahlenen Kaffees Tee in einen besonders geformten Filterbehälter eingefüllt und mittels des erhitzten Wassers aufgebrüht wird.

Bei den bekannten Kaffee- oder Teeautomaten ist eine erhebliche Zeitdauer zum Aufbereiten des heißen Getränks erforderlich, da jeweils nur kleinere Mengen erhitzten Wassers in das Filtergehäuse und von dort in den Getränkebehälter geleitet werden. Aus diesem Grunde ist es erforderlich, den Boden des Getränkebehälters zur Aufnahme des heißen Getränks zu erwärmen und ggf. zusätzlich mit einer Wärmeisolation zu versehen, damit der im Getränkebehälter befindliche Kaffee bzw. Tee vor dem Genuß nicht zu stark abkühlt. Durch das Warmhalten des im Getränkebehälter befindlichen Kaffees oder Tees nimmt jedoch das Aroma und der Geschmack des Kaffees bzw. Tees ab und führt somit zu einer verminderten Qualität des aufbereiteten heißen Getränks.

Der vorliegenden Erfindung liegt daher die Aufgabenstellung zugrunde, eine Vorrichtung der eingangs genannten Gattung zu schaffen, die ein Aufbereiten eines heißen Getränks in kürzestmöglicher Zeit mit höchster Qualität des heißen Getränks ermöglicht und die bei geringen Herstellungskosten leicht herstellbar ist.

Diese Aufgabe wird erfindungsgemäß durch das kennzeichnende Merkmal des Anspruchs 1 gelöst.

Der vorliegenden Erfindung liegt der Gedanke zugrunde, die Vorteile eines Mikrowellengerätes bei der Zubereitung von Speisen und Getränken auch für die Herstellung heißer Getränke nutzbar zu machen und eine Vorrichtung zum Aufbereiten derartiger heißer Getränke zu schaffen, die für den Einsatz in Mikrowellengeräten besonders geeignet ist. Die geschlossene Form der Vorrichtung ermöglicht ein Erhitzen der im Flüssigkeitsbehälter befindliche Flüssigkeit innerhalb kürzestmöglicher Zeit, wobei durch einen Überlauf sichergestellt wird, daß nur ein Teil der Flüssigkeit in den Filter gelangt, so daß ein optimal gesteuerter Brühvorgang sichergestellt ist.

Die geschlossene Form der Vorrichtung stellt zudem sicher, daß das aufbereitete Getränk ohne Qualitätsverluste aufbewahrt und mittels der Mikrowellenstrahlung warmgehalten wird.

Durch die Nutzbarmachung eines Mikrowellengerätes auch für die Aufbereitung heißer Getränke werden vom Benutzer die zusätzlichen Anschaffungskosten für einen Kaffee- oder Teeautomaten sowie zusätzliche elektrische Anschlußkosten eingespart.

Eine vorteilhafte Weiterbildung der erfindungsgemäßen Lösung ist dadurch gekennzeichnet, daß der Überlauf aus einem in dem Flüssigkeitsbehälter ausgebildeten Körper besteht, dessen Deckfläche geschlossen, dessen Bodenfläche einen Flüssigkeitseinlaß und einen Flüssigkeitsauslaß aufweist und in dessen Innenraum eine Sperrwand zwischen dem Flüssigkeitseinlaß und dem Flüssigkeitsauslaß angeordnet ist.

Durch die Ausbildung eines Überlaufs im Flüssigkeitsbehälter wird sichergestellt, daß nur die erhitzte Flüssigkeit aus dem Flüssigkeitsbehälter in den Substratbehälter gelangen kann, wobei durch die spezielle Ausgestaltung des Überlaufs sichergestellt wird, daß beim Erhitzen der im Flüssigkeitsbehälter befindlichen Flüssigkeit ein kontinuierlicher Durchlauf vom Flüssigkeitsbehälter in den Substratbehälter erfolgt.

Eine weitere vorteilhafte Ausgestaltung der erfindungsgemäßen Lösung ist dadurch gekennzeichnet, daß der Substratbehälter aus einem Filter und einem mindestens oberhalb der oberen Filteröffnung fortgesetzten oberen Gehäuseteil besteht, in das der Flüssigkeitsbehälter einsetzbar ist.

Die Ausgestaltung des Substratbehälters ermöglicht eine geschlossene Bauform der gesamten Vorrichtung, so daß zum einen eine kompakte Bauweise möglich ist und zum anderen keine oder nur geringe Wärmeverluste sowie hinsichtlich der Aufbereitung des heißen Getränks Aromaverluste auftreten können.

In einer weiteren vorteilhaften Ausgestaltung der erfinderungsgemäßen Lösung erstreckt sich das obere Gehäuseteil zusätzlich in Richtung auf die untere Filteröffnung und ist formschlüssig mit einem unteren, die Wandung des Getränkebehälters bildenden Gehäuseteil verbunden.

Diese zusätzliche Maßnahme erhöht die Kompaktheit der gesamten Vorrichtung, wodurch sichergestellt wird, daß die Vorrichtung auch für kleinere Mikrowellengeräte mit Innenräumen geringer Abmessungen geeignet sind. Die formschlüssige Verbindung des oberen und unteren Gehäuseteiles stellt zudem sicher, daß beim Transport der Vorrichtung eine feste Verbindung gegeben ist, so daß ein unbeabsichtigtes Herabfallen einzelner Teile der Vorrichtung vermieden wird.

In einer weiteren vorteilhaften Ausgestaltung der erfindungsgemäßen Lösung ist der Flüssigkeitsbehälter durch einen ebenen Deckel abgeschlossen, zwischen dem und der Wand des Flüssigkeitsbehälters eine Dichtung angeordnet ist.

Der ebene Deckel stellt eine geringe Bauhöhe der gesamten Vorrichtung sicher und die zwischen dem Deckel und der Wand des Flüssigkeitsbehälters angeordnete Dichtung ermöglicht einen Überdruck im Flüssigkeitsbehälter infolge der Erwärmung der im Flüssigkeitsbehälter befindlichen Flüssigkeit durch die Mikrowellenstrahlung, die daran anschließend die Flüssigkeit zwingt, durch den Überlauf in den Substratbehälter zu fließen.

Eine weitere vorteilhafte Ausgestaltung der erfindungsgemäßen Lösung ist dadurch gekennzeichnet, daß das obere Gehäuseteil einen ersten Griff und das untere Gehäuseteil einen zweiten Griff aufweisen, wobei beide Griffe vorzugsweise bündig aneinandergrenzen.

Diese Ausgestaltung der erfindungsgemäßen Lösung schafft zum einen ein geschlossenes, formschönes Gehäuse und zum anderen bietet es die Möglichkeit, sowohl den Substratbehälter mit dem darin aufgenommen Flüssigkeitsbehälter einerseits und den Getränkebehälter andererseits getrennt voneinander zu transportieren. Andererseits wird nach einem weiterführenden Merkmal der erfindungsgemäßen Lösung die Vorraussetzung dafür geschaffen, daß der den Flüssigkeitsbehälter abschließende Deckel auch auf den Getränkebehälter bei abgenommenem Substrat- und Flüssigkeitsbehälter aufgesetzt werden kann.

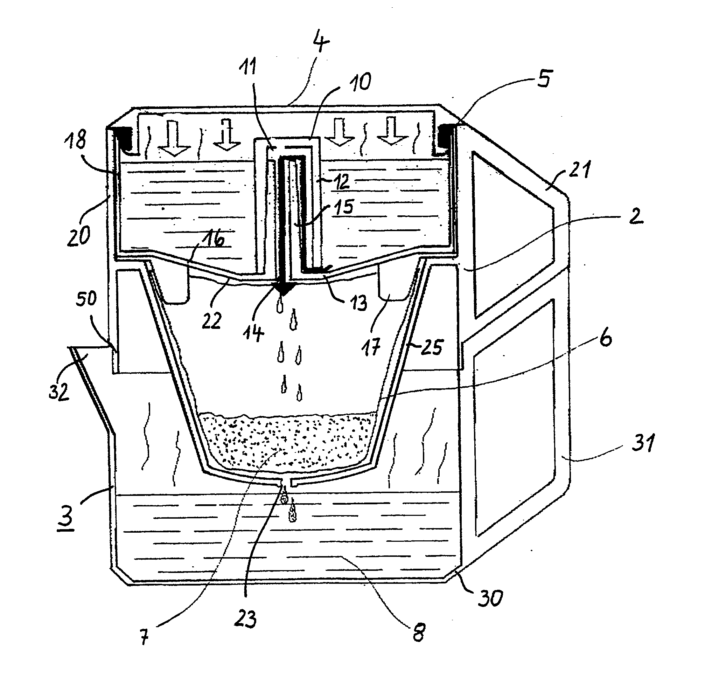

Anhand eines in der Zeichnung dargestellten Ausführungsbeispieles soll der der Erfindung zugrundeliegende Gedanke näher erläutert werden.

Die einzige Figur der Zeichnung zeigt einen Längsschnitt durch die Vorrichtung mit einer schematischen Darstellung des Fließweges des erhitzten Wassers bzw. heißen Getränks.

Die Vorrichtung weist einen kannenförmigen Getränkebehälter 3 auf, in dessen Innenraum das aufbereitete heiße Getränk, vorzugsweise Kaffee oder Tee gesammelt wird. Die Wand 30 des Getränkebehälters 3 weist einerseits einen Griff 31 und andererseits gegenüber dem Griff 31 eine Ausgießöffnung 32 auf.

In den Getränkebehälter 3 ist ein Substratbehälter 2 vorzugsweise formschlüssig einsetzbar, wobei die Verbindung zwischen Substratbehälter 2 und Getränkebehälter 3 in einem Überlappungsbereich 50 erfolgt. Der Substratbehälter 2 besteht aus einem Gehäuse 20 und einem im Innern des Gehäuse 20 angeordneten Filterkörper 25, der in dem hier dargestellten Ausführungsbeispiel nach Art eines umgedrehten Kegelstumpfes ausgebildet ist. Selbstverständlich kann der Filterkörper 25 auch jede andere kommerziell übliche Querschnittsform ausweisen.

In den Filterkörper 25 ist ein Filter 6 einsetzbar, der vorzugsweise aus einem flüssigkeitsdurchlässigen Papier besteht, in das das Getränkesubstrat 7 in vorgegebener Dosierung eingefüllt werden kann.

Das Gehäuse 20 des Substratbehälters 2 ist mit einem Griff 21 versehen, der vorzugsweise bündig mit dem Griff 31 des Getränkebehälters 3 abschließt.

In den Substratbehälter 2 ist ein Flüssigkeitsbehälter 1 einsetzbar, der zur Aufnahme einer Flüssigkeit, vorzugsweise Wasser dient. Mittig im Flüssigkeitsbehälter 1 befindet sich ein Überlauf 10, über den die Flüssigkeit vom Flüssigkeitsbehälter 1 in den Substratbehälter 2 beim Erhitzen fließen kann.

Der Überlauf 10 ist vorzugsweise mittig und in einer Absenkung der Bodenfläche 16 des Flüssigkeitsbehälters angeordnet und besteht aus einer geschlossenen Deckfläche 11 sowie einer im wesentlichen geschlossenen Seitenwand, die lediglich einen Flüssigkeitseinlaß 13 aufweist. Im Innern der im wesentlichen geschlossenen Seitenwand 12 ist ein Steg 15 angeordnet, der die erhitzte Flüssigkeit vom Flüssigkeitseinlaß 13 bis in die Nähe der geschlossenen Deckfläche 11 und von dort zum Flüssigkeitsauslaß 14 zwingt.

In der Zeichnung ist der Weg der Flüssigkeit vom Flüssigkeitsbehälter 1 in den Substratbehälter 2 durch den Pfeil A schematisch dargestellt.

Zum zentrierten Einsetzen des Flüssigkeitsbehälters 1 in den Substratbehälter 2 sind Stege 17 vorgesehen, die sich vom Boden 16 des Flüssigkeitsbehälters 1 in die obere Öffnung 22 des Filterkörpers 25 erstrecken.

Der obere Abschluß des Flüssigkeitsbehälters 1 wird durch einen ebenen Deckel 4 bewirkt, der eine umlaufende Nut 41 aufweist, in die eine Dichtung 5 eingesetzt ist, die dichtend am Deckel 4 einerseits und an der Wand 18 des Flüssigkeitsbehälters 1 andererseits bzw. der Gehäusewand 20 anliegt.

Zum Aufbereiten eines heißen Getränks, beispielsweise Kaffee, wird gemahlener Kaffee 7 in einen in den Filterkörper 25 eingesetzten Filter 6 eingefüllt und daran anschließend der mit Flüssigkeit, vorzugsweise Wasser gefüllte Flüssigkeitsbehälter 1 in das Gehäuse 20 eingesetzt und mit dem Deckel 4 verschlossen. Daran anschließend wird die gesamte Vorrichtung in ein Mikrowellengerät eingestellt und nach dem Einschalten des Mikrowellengerätes die Flüssigkeit im Flüssigkeitsbehälter 1 erhitzt.

Infolge der Erhitzung der im geschlossenen Flüssigkeitsbehälter 1 befindlichen Flüssigkeit entsteht ein Überdruck und die Flüssigkeit strömt über den Überlauf 10 aus dem Flüssigkeitsbehälter 1 in den Filter 6, durchsetzt dort das Flüssigkeitssubstrat und das aufbereitete heiße Getränk tropft durch die untere Ausflußöffnung 23 des Filterkörpers 25 in den Getränkebehälter 3, wo das aufbereitete heiße Getränk 8 gesammelt und zum Verzehr über die Ausgießöffnung 32 in Trinkgefäße abgefüllt werden kann.

Die in der Zeichnung dargestellt Vorrichtung ist vorzugsweise zylinderförmig aufgebaut und weist zwei speziell geformte Handgriffe 21, 31 auf, die wahlweise eine Bedienung als ein Handgriff oder eine getrennte Bedienung des Substratbehälters 2 und des Getränkebehälters 3 zulassen. Zu diesem Zweck ist der eine Handgriff 21 des Substratbehälters 2 trapezförmig ausgebildet, während der andere Handgriff 31 des Getränkebehälters 3 nach Art eines Parallelogramms ausgebildet ist, wobei jeweils zwei Schmalseiten der Handgriffe 21, 31 fluchtend aneinandergrenzen.

Die Vorrichtung besteht vorzugsweise aus einem hitzebeständigen Kunststoff, der gegenüber Mikrowellen durchlässig ist und gleichzeitig gute Wärmeisolationseigenschaften aufweist. Die Verwendung von Kunststoff als Material für die in der Zeichnung dargestellt Vorrichtung ermöglicht zudem eine einfache Herstellung durch Pressen der einzelnen Teile der Vorrichtung und ein beliebiges Einfärben der Teile, so daß ein insgesamt gefälliges Erscheinungsbild erzielt wird.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

**Patentansprüche**

1. Vorrichtung zum Bereiten heißer Getränke aus einer Flüssigkeit und einem Getränkesubstrat, mit einem die Flüssigkeit aufnehmenden Flüssigkeitsbehälter und einem das Getränkesubstrat aufnehmenden Substratbehälter, durch den die erhitzte Flüssigkeit in einen das heiße Getränk aufnehmenden Getränkebehälter geleitet wird,

   **dadurch gekennzeichnet,**

   daß der Flüssigkeitsbehälter (1) im wesentlichen dampfdicht abgeschlossen ist und einen Überlauf (10) aufweist, der in den Substratbehälter (2) gerichtet ist,

   und daß mindestens der Flüssigkeitsbehälter (1) aus einem für Mikrowellen durchlässigen Material besteht.

2. Vorrichtung nach Anspruch 1 , **dadurch gekennzeichnet,** daß der Flüssigkeitsbehälter (1), der Substratbehälter (2) und der Getränkebehälters (3) aus einem für Mikrowellen durchlässigen Material bestehen.

3. Vorrichtung nach Anspruch 1 oder 2, **dadurch gekennzeichnet,** daß der Überlauf (10) aus einem in dem Flüssigkeitsbehälter (1) ausgebildeten Körper besteht, dessen Deckfläche (11) geschlossen, dessen Bodenfläche (12) einen Flüssigkeitseinlaß (13) und einen Flüssigkeitsauslauß (14) aufweist und in dessen Innenraum eine Sperrwand (15) zwischen dem Flüssigkeitseinlaß (13) und dem Flüssigkeitsauslaß (14) angeordnet ist.

4. Vorrichtung nach Anspruch 3 , **dadurch gekennzeichnet,** daß der Überlauf (10) mittig im Flüssigkeitsbehälter (1) angeordnet ist.

5. Vorrichtung nach einem der vorangehenden Ansprüche, **dadurch gekennzeichnet,** daß der Flüssigkeitsbehälter (1) eine zur Behältermitte geneigte Bodenfläche (16) aufweist.

6. Vorrichtung nach einem der vorangehenden Ansprüche, **dadurch gekennzeichnet,** daß der Flüssigkeitsbehälter (1) zentrisch in den Substratbehälter (2) einsetzbar ist.

7. Vorrichtung nach Anspruch 6 , **dadurch gekennzeichnet,** daß der Substratbehälter (2) aus einem Filter (25) und einem mindestens oberhalb der oberen Filteröffnung (22) fortgesetzten oberen Gehäuseteil (20) besteht, in das der Flüssigkeitsbehälter (1) einsetzbar ist.

8. Vorrichtung nach Anspruch 7 , **dadurch gekennzeichnet,** daß sich das obere Gehäuseteil (20) zusätzlich in Richtung auf die untere Filteröffnung (23) erstreckt und formschlüssig mit einem unteren, die Wandung des Getränkebehälters (3) bildenden Gehäuseteil (30) verbunden ist.

9. Vorrichtung nach einem der vorangehenden Ansprüche, **dadurch gekennzeichnet,** daß der Flüssigkeitsbehälter (1) durch einen ebenen Deckel (4) abgeschlossen ist, zwischen dem und der Wand (18) des Flüssigkeitsbehälters (1) eine Dichtung (5) angeordnet ist.

10. Vorrichtung nach Anspruch 9 , **dadurch gekennzeichnet,** daß die Dichtung (5) in einer umlaufenden Nut (41) des Deckels (4) angeordnet ist.

11. Vorrichtung nach mindestens einem der vorangehenden Ansprüche, **dadurch gekennzeichnet,** daß der Flüssigkeitsbehälter (1) sowie das obere und untere Gehäuseteil (20, 30) zylinderförmig ausgebildet sind.

12. Vorrichtung nach mindestens einem der vorangehenden Ansprüche, **dadurch gekennzeichnet,** daß von der Bodenfläche (16) des Flüssigkeitsbehälters (1) Einsatzstege (17) abstehen, die in die obere Filteröffnung (22) einsetzbar sind.

13. Vorrichtung nach mindestens einem der vorangehenden Ansprüche, **dadurch gekennzeichnet,** daß das obere Gehäuseteil (20) einen ersten Griff (21) und das untere Gehäuseteil (30) einen zweiten Griff (31) aufweisen, die bündig aneinandergrenzen.

14. Vorrichtung nach Anspruch 13, **dadurch gekennzeichnet,** daß der erste Griff (21) einen trapezförmigen Griffsteg und der zweite Griff (31) einen parallelogrammförmigen Griffsteg aufweist.

15. Vorrichtung nach mindestens einem der vorangehenden Ansprüche, **dadurch gekennzeichnet,** daß der Getränkebehälter (3) eine dem zweiten Griff (31) gegenüberliegende Ausgießöffnung (32) aufweist.

Europäisches Patentamt

EUROPÄISCHER RECHERCHENBERICHT

Nummer der Anmeldung

EP    90 25 0168

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 908 222 (YU)<br><br>* das ganze Dokument * | 1-4,6-8, 11,12 | A47J31/54 |
| A | | 9 | |
| | --- | | |
| X | WO-A-8 909 011 (ALADDIN INDUSTRIES INC)<br>* Seite 2, Zeile 30 - Seite 4, Zeile 21; Abbildung 1 * | 1,15 | |
| | --- | | |
| E | EP-A-0 383 439 (FARBERWARE INC)<br>* Spalte 3, Zeile 22 - Spalte 14, Zeile 14; Abbildungen * | 1-15 | |
| | --- | | |
| P,X | FR-A-2 640 486 (PLOUVIER)<br>* Seite 1, Zeile 14 - Seite 3, Zeile 34; Abbildungen * | 1,3,4,11 | |
| | ----- | | |

### RECHERCHIERTE SACHGEBIETE (Int. Cl.5)

A47J
H05B

Der vorliegende Recherchenbericht wurde für alle Patentansprüche erstellt

| Recherchenort | Abschlußdatum der Recherche | Prüfer |
|---|---|---|
| DEN HAAG | 16 SEPTEMBER 1991 | BODART P.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)